# EUROPÄISCHE PATENTSCHRIFT

(11) **EP 1 855 044 B1**
(45) Veröffentlichungstag und Bekanntmachung des Hinweises auf die Patenterteilung: **15.10.2008**
(21) Anmeldenummer: 07016609.5
(22) Anmeldetag: 20.12.2005
(51) Int. Cl.: F16M 1/00, F16J 15/06

(54) **Gehäusedeckel**
Casing lid
Couvercle de boîtier

(30) Priorität: 25.01.2005 DE 102005003414
(43) Veröffentlichungstag der Anmeldung: 14.11.2007
(62) Teilanmeldung aus: 05027829.0
(73) Patentinhaber: ElringKlinger AG, 72581 Dettingen (DE)
(72) Erfinder: Diez, Armin, 73252 Lenningen (DE)
(74) Vertreter: Hoeger, Stellrecht & Partner Patentanwälte

(56) Entgegenhaltungen:
- DE-A1- 4 004 199
- DE-A1- 10 245 803
- DE-U1- 8 801 471
- GB-A- 2 242 485
- GB-A- 2 265 904

## Beschreibung

Die vorliegende Erfindung betrifft einen Gehäusedeckel zum Festlegen an einem Gehäuse, insbesondere an einem Getriebegehäuse oder an einem Lenkgetriebegehäuse.

Gehäusedeckel zum Verschließen von Öffnungen an einem Getriebegehäuse oder an einem Lenkgetriebegehäuse, wie sie aus dem Stand der Technik bekannt sind, sind als Aluminium-Gussteile ausgebildet, die mechanisch bearbeitet werden und zusammen mit einer separat von dem Gussteil ausgebildeten Dichtung an dem betreffenden Gehäuse montiert werden. Herstellung und Montage solcher bekannten Gehäusedeckel sind aufwendig.

Die DE 102 45 803 A1 offenbart einen Gehäusedeckel gemäß dem Oberbegriff von Anspruch 1.

Der vorliegenden Erfindung liegt die Aufgabe zugrunde, einen Gehäusedeckel der eingangs genannten Art zu schaffen, welcher einfach herzustellen und zu montieren ist.

Diese Aufgabe wird durch einen Gehäusedeckel nach Anspruch 1 gelöst.

Dadurch, dass der erfindungsgemäße Gehäusedeckel als ein Blechformteil mit einer integrierten Abdichtung in Form des an dem Gehäusedeckel vorgesehenen Dichtungswulstes ausgebildet ist, kann der erfindungsgemäße Gehäusedeckel in sehr rationeller Weise, beispielsweise in einem Folgeverbundwerkzeug, aus einem Blech-Ausgangsmaterial hergestellt werden.

Dadurch, dass die Abdichtung in Form des Dichtungswulstes an dem Gehäusedeckel integriert ist, wird auch die Montage des Gehäusedeckels vereinfacht, da die Anzahl der zu montierenden Teile reduziert wird.

Dadurch, dass der zwischen zwei Befestigungsmitteldurchtrittsöffnungen liegende Kontaktbereichsabschnitt der Innenseite des Gehäusedeckels zumindest abschnittsweise über die innenseitigen Ränder der beiden angrenzenden Befestigungsmitteldurchtrittsöffnungen übersteht, wird erreicht, dass der Gehäusedeckel bei seiner Montage zuerst mit diesen überstehenden Bereichen des Kontaktbereichsabschnitts an dem zu verschließenden Gehäuse anliegt, bevor die Befestigungsmittel angezogen werden, wodurch dann auch die innenseitigen Ränder der beiden angrenzenden Befestigungsmitteldurchtrittsöffnungen zur Anlage an dem zu verschließenden Gehäuse kommen. Durch die so gestaltete Topographie des Kontaktbereichs des Gehäusedeckels mit dem zu verschließenden Gehäuse wird die Variation der Flächenpressung, mit welcher der Gehäusedeckel gegen das zu verschließende Gehäuse verspannt wird, in der Längsrichtung des Dichtungswulstes, welche aufgrund der variierenden Abstände von dem jeweils nächstliegenden Befestigungsmittel hervorgerufen wird, zumindest teilweise ausgeglichen und somit ein gleichmäßiges Anliegen des Kontaktbereichs und insbesondere des Dichtungswulstes an dem zu verschließenden Gehäuse an jeder Stelle des Kontaktbereichs bzw. des Dichtungswulstes erzielt.

Diese Topographie des Kontaktbereichs kann insbesondere durch einen Biege- und/oder Prägevorgang an dem Gehäusedeckel während dessen Herstellung erzeugt werden.

Bei einer bevorzugten Ausgestaltung der Erfindung ist vorgesehen, dass der Kontaktbereichsabschnitt, von der Innenseite des Gehäusedeckels aus gesehen, im wesentlichen konvex ausgebildet ist.

Bei einer Ausgestaltung der Erfindung ist vorgesehen, dass der Gehäusedeckel längs des Kontaktbereichsabschnitts eine im wesentlichen konstante Materialstärke aufweist.

Alternativ hierzu kann auch vorgesehen sein, dass der Gehäusedeckel längs des Kontaktbereichsabschnitts eine in der Längsrichtung des Kontaktbereichsabschnitts variierende Materialstärke aufweist. Eine solche Variation der Materialstärke des Gehäusedeckels im Kontaktbereich kann beispielsweise durch einen Prägevorgang an einem ursprünglich konstante Materialstärke aufweisenden Gehäusedeckel erzeugt werden.

Der dem Kontaktbereichsabschnitt gegenüberliegende Bereich der Außenseite des Gehäusedeckels, welche im montierten Zustand des Gehäusedeckels dem zu verschließenden Gehäuse abgewandt ist, kann im wesentlichen eben ausgebildet sein.

Der Überstand (x) des Kontaktbereichsabschnitts über die innenseitigen Ränder der beiden angrenzenden Befestigungsmitteldurchtrittsöffnungen kann in der Längsrichtung des Kontaktbereichsabschnitts variieren.

Vorzugsweise ist vorgesehen, dass der Überstand (x) des Kontaktbereichsabschnitts über die innenseitigen Ränder der beiden angrenzenden Befestigungsmitteldurchtrittsöffnungen ungefähr in der Mitte zwischen den beiden angrenzenden Befestigungsmitteldurchtrittsöffnungen am größten ist.

Die Variation des Überstands (x) des Kontaktbereichsabschnitts über die innenseitigen Ränder der beiden angrenzenden Befestigungsmitteldurchtrittsöffnungen kann insbesondere unter Berücksichtigung eines auf den Gehäusedeckel wirkenden Innendrucks und/oder unter Berücksichtigung von externen Kräften, die über eine Ankopplung, beispielsweise eine an der Gehäusedeckel-Außenseite angeordnete Halterung, auf den Gehäusedeckel übertragen werden, so festgelegt werden, dass die Variation der Innendruckkräfte bzw. der externen Kräfte in der Längsrichtung des Kontaktbereichsabschnitts zumindest abschnittsweise im wesentlichen kompensiert wird.

Bei einer bevorzugten Ausgestaltung der Erfindung ist ferner vorgesehen, dass der Gehäusedeckel mit einer eingeprägten Nut versehen ist, in welcher der Dichtungswulst angeordnet ist.

Ferner kann der Gehäusedeckel zu seiner Versteifung mit einem in den Gehäusedeckel eingeprägten Versteifungselement versehen sein.

Dieses Versteifungselement kann insbesondere als eine Versteifungssicke ausgebildet sein.

Die Versteifungssicke kann dabei jeden beliebigen Querschnitt aufweisen, insbesondere also als Vollsicke oder als Halbsicke ausgebildet sein.

Ist der Gehäusedeckel mit einer in den Gehäusedeckel eingeprägten Nut versehen, in welcher der Dichtungswulst angeordnet ist, so verläuft das Versteifungselement vorzugsweise zumindest abschnittsweise im wesentlichen parallel zu dieser Nut.

Der Dichtungswulst ist vorzugsweise stoffschlüssig mit einer Grundplatte des Gehäusedeckels verbunden.

Diese stoffschlüssige Verbindung kann insbesondere dadurch erzeugt sein, dass der Dichtungswulst durch Aufbringen eines fließfähigen Vormaterials, beispielsweise durch eine Dispenser-Düse, und anschließendes Vulkanisieren desselben oder mittels eines Musterdruckverfahrens, insbesondere mittels eines Siebdruckverfahrens, auf dem Gehäusedeckel aufgebracht ist.

Das für den Dichtungswulst verwendete Vormaterial kann insbesondere ein Ein-Komponenten-Silikonmaterial oder ein Zwei-Komponenten-Silikonmaterial sein.

Grundsätzlich kann die metallische Grundplatte des Gehäusedeckels aus einem beliebigen metallischen Material gebildet sein.

Bei einer bevorzugten Ausgestaltung der Erfindung ist vorgesehen, dass der Gehäusedeckel als ein Blechformteil aus Aluminium oder aus einer Aluminiumlegierung ausgebildet ist.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung eines Gehäusedeckels, von der im montierten Zustand dem Gehäuse zugewandten Innenseite des Gehäusedeckels her gesehen;
- Fig. 2: einen schematischen Querschnitt durch den Gehäusedeckel aus Fig. 1, längs der Linie 2 - 2 in Fig. 1;
- Fig. 3: eine vergrößerte Darstellung des Bereichs I aus Fig. 2;
- Fig. 4: einen schematischen Längsschnitt durch den Gehäusedeckel aus Fig. 1, im Ruhezustand vor der Montage des Gehäusedeckels, längs der Linie 4 - 4 in Fig. 1;
- Fig. 5: einen schematischen Querschnitt durch den Gehäusedeckel aus Fig. 1 längs der Linie 5 - 5 in Fig. 1, mit durch die Befestigungsmitteldurchtrittsöffnungen des Gehäusedeckels hindurchgesteckten Befestigungsschrauben;
- Fig. 6: einen der Fig. 4 entsprechenden schematischen Längsschnitt durch eine zweite Ausführungsform eines Gehäusedeckels, bei welchem die Materialstärke des Gehäusedeckels in zwischen den Befestigungsmitteldurchtrittsöffnungen liegenden Kontaktbereichsabschnitten in Abhängigkeit vom Abstand zu der nächstliegenden Befestigungsmitteldurchtrittsöffnung variiert;
- Fig. 7: einen der Fig. 5 entsprechenden schematischen Querschnitt durch die zweite Ausführungsform eines Gehäusedeckels, mit durch die Befestigungsmitteldurchtrittsöffnungen hindurchgesteckten Befestigungsschrauben; und
- Fig. 8: eine ausschnittsweise, schematische perspektivische Darstellung eines Randbereichs einer dritten Ausführungsform eines Gehäusedeckels, bei welcher ein an den Gehäusedeckel angeordneter Dichtungswulst die Befestigungsmitteldurchtrittsöffnungen ringförmig umgibt.

Gleiche oder funktional äquivalente Elemente sind in allen Figuren mit denselben Bezugszeichen bezeichnet.

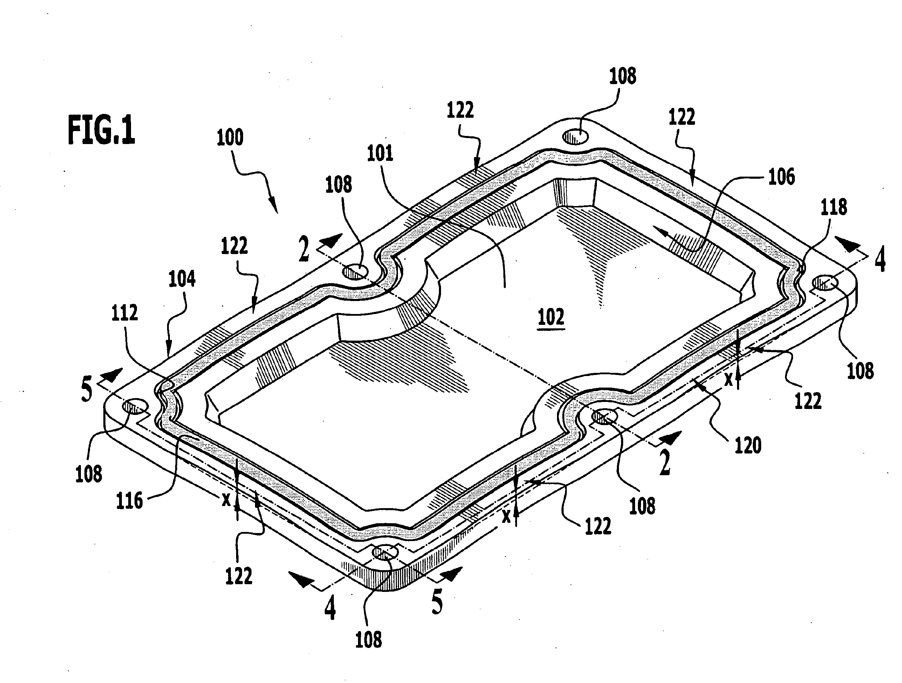

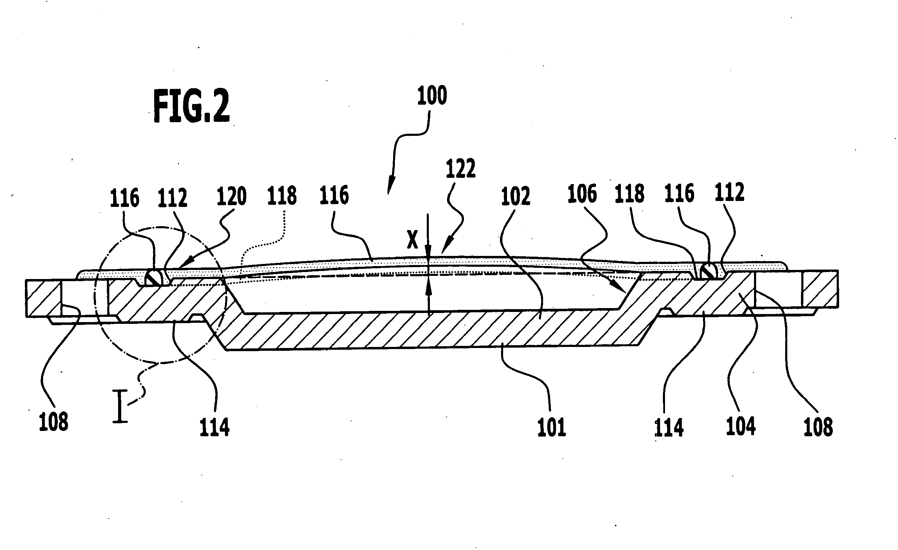

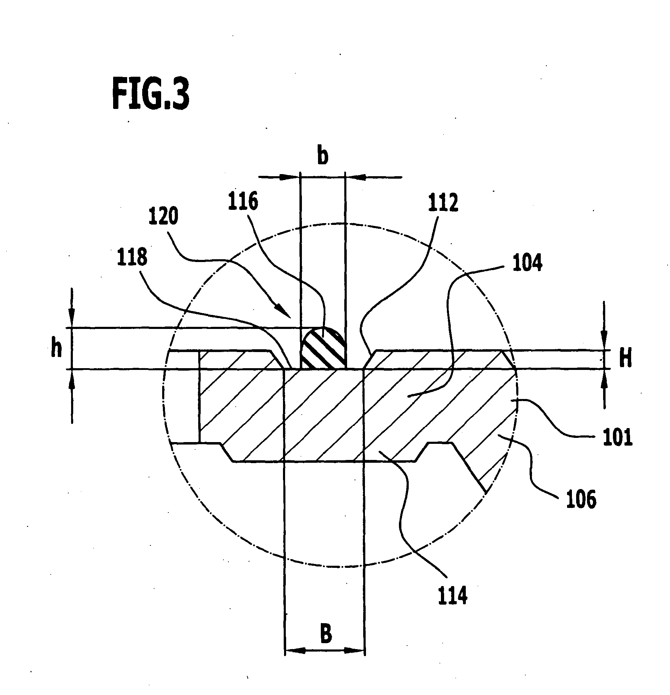

Ein in den Fig. 1 bis 5 dargestellter, als Ganzes mit 100 bezeichneter Gehäusedeckel ist zum Verschließen einer Gehäuseöffnung an einem (nicht dargestellten) Getriebegehäuse oder an einem Lenkgetriebegehäuse vorgesehen.

Der Gehäusedeckel 100 ist im wesentlichen rechteckig ausgebildet und umfasst eine metallische Grundplatte 101 mit einem im wesentlichen ebenen Mittelbereich 102, der von einem umlaufenden Randbereich 104 umgeben ist, welcher über eine ringförmig umlaufende Abkröpfung 106 mit dem Mittelbereich 102 des Gehäusedeckels 100 verbunden ist.

Der Randbereich 104 steht über den Mittelbereich 102 in der im montierten Zustand des Gehäusedeckels 100 zu dem zu verschließenden Gehäuse hin weisenden Richtung vor.

Der Randbereich 104 ist mit mehreren, beispielsweise mit sechs, Befestigungsmitteldurchtrittsöffnungen 108 versehen, welche längs des Umfangs des Gehäusedeckels 100 im Abstand voneinander aufeinanderfolgen.

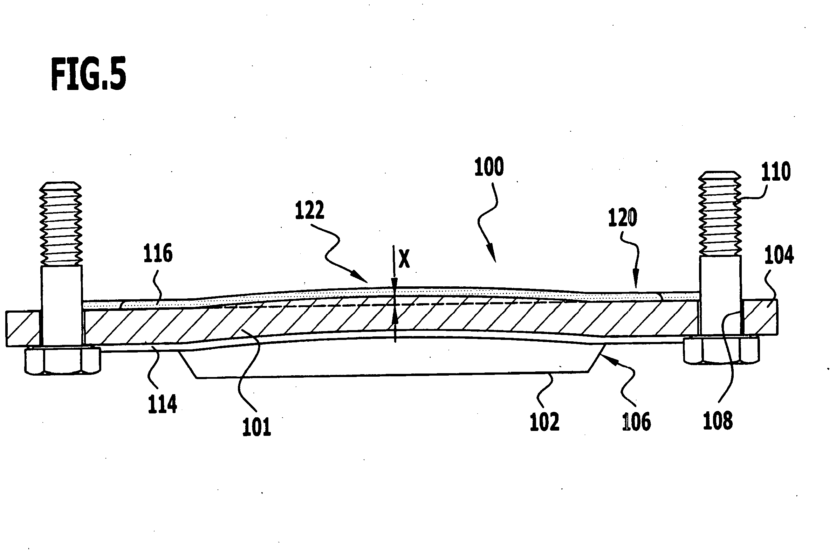

Diese Befestigungsmitteldurchtrittsöffnungen 108 dienen bei der Montage des Gehäusedeckels 100 an dem zu verschließenden Gehäuse zur Aufnahme der Schäfte von Befestigungsschrauben 110 (siehe Fig. 5), welche sich durch die Befestigungsmitteldurchtrittsöffnungen 108 hindurch erstrecken und mit ihren Außengewinden in korrespondierende Innengewinde von Gewindelöchern des zu verschließenden Gehäuses eingedreht werden.

Der Randbereich 104 des Gehäusedeckels 100 ist ferner mit einer eingeprägten Nut 112 versehen, welche auf der im montierten Zustand des Gehäusedeckels 100 dem zu verschließenden Gehäuse zugewandten Innenseite des Randbereichs 104 im wesentlichen parallel zu der Abkröpfung 106 und ringförmig um den Mittelbereich 102 des Gehäusedeckels 100 herum ausgebildet ist, wobei die Nut 112 zwischen der Abkröpfung 106 einerseits und den Befestigungsmitteldurchtrittsöffnungen 108 andererseits verläuft.

Da die Nut 112 durch Einprägen in den Randbereich 104 des Gehäusedeckels 100 gebildet ist, entspricht der auf der Innenseite des Randbereichs 104 verlaufenden Nut 112 ein an der Außenseite des Randbereichs 104 ausgebildeter ringförmiger Vorsprung 114.

Zur fluiddichten Abdichtung zwischen dem Gehäusedeckel 100 und dem zu verschließenden Gehäuse ist ein Dichtungswulst 116 vorgesehen, welcher am Nutgrund 118 der Nut 112 angeordnet ist und sich innerhalb der Nut 112 um den Mittelbereich 102 des Gehäusedeckels 100 herum erstreckt.

Der Dichtungswulst 116 ist aus einem Elastomermaterial, beispielsweise aus einem Silikonmaterial, gebildet und kann beispielsweise durch Auftrag mittels eines Dispensers oder durch ein Siebdruckverfahren in die Nut 112 appliziert werden.

Die Breite b des Dichtungswulstes 116, d.h. dessen Erstreckung quer zur Längsrichtung der Nut 112, beträgt beispielsweise ungefähr 1,5 mm, bei einer Gesamtbreite B der Nut 112 von beispielsweise ungefähr 2,5 mm.

Die Höhe h des Dichtungswulstes 116 über dem Nutgrund 118 beträgt beispielsweise ungefähr 120 µm +/- 40 µm, bei einer Nuttiefe H von beispielsweise ungefähr 50 µm, so dass der Dichtungswulst 116 im Ruhezustand des Gehäusedeckels 100 über die an die Nut 112 angrenzenden Bereiche des Gehäusedeckels 100 in der im montierten Zustand zu dem Gehäusedeckel 100 hin weisenden Richtung übersteht.

Die Nut 112 mit dem Dichtungswulst 116 und die an die Nut 112 angrenzenden Bereiche des Randbereichs 104 des Gehäusedeckels 100 bilden zusammen einen Kontaktbereich 120 des Gehäusedeckels 100, mit welchem der Gehäusedeckel 100 im montierten Zustand an dem zu verschließenden Gehäuse anliegt.

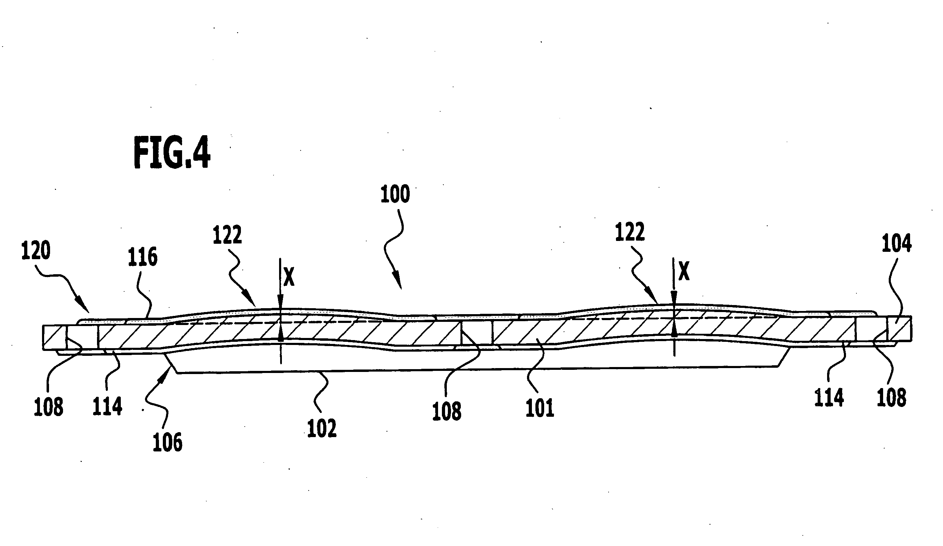

Um ein gleichmäßiges Anliegen des Gehäusedeckels 100 an dem zu verschließenden Gehäuse zu gewährleisten, wird der Gehäusedeckel 100 im Kontaktbereich 120 mit einer Topographie versehen, d.h. die zwischen jeweils zwei Befestigungsmitteldurchtrittsöffnungen 108 liegenden Kontaktbereichsabschnitte 122 des Gehäusedeckels 100 werden so ausgebildet, dass sie im Ruhezustand des Gehäusedeckels 100, d.h. vor dem Anziehen des Gehäusedeckels 100 gegen das zu verschließende Gehäuse mittels der Befestigungsschrauben 110, in der im montierten Zustand des Gehäusedeckels 100 zu dem zu verschließenden Gehäuse hin weisenden Richtung über die innenseitigen Ränder der jeweils angrenzenden Befestigungsmitteldurchtrittsöffnungen 108 überstehen, wie dies schematisch in dem Längsschnitt der Fig. 4 dargestellt ist.

Auf diese Weise wird erreicht, dass der Gehäusedeckel 100 bei seiner Montage zuerst mit den ungefähr mittig zwischen jeweils zwei Befestigungsmitteldurchtrittsöffnungen 108 liegenden Mittelbereichen der Kontaktbereichsabschnitte 122 an dem zu verschließenden Gehäuse anliegt, bevor die Befestigungsschrauben 110 angezogen werden, wodurch dann auch die die innenseitigen Ränder der Befestigungsmitteldurchtrittsöffnungen 108 umgebenden Bereiche des Gehäusedeckels 100 zur Anlage an dem zu verschließenden Gehäuse kommen.

Durch die so gestaltete Topographie des Kontaktbereichs 120 des Gehäusedeckels 100 wird also die Variation der Flächenpressung, mit welcher der Gehäusedeckel 100 gegen das zu verschließende Gehäuse verspannt wird, in der Längsrichtung des Dichtungswulstes 116, welche aufgrund der variierenden Abstände von der jeweils nächstliegenden Befestigungsschraube 110 hervorgerufen wird, zumindest teilweise ausgeglichen und somit ein gleichmäßiges Anliegen des Kontaktbereichs 120 und insbesondere des Dichtungswulstes 116 an dem zu verschließenden Gehäuse an jeder Stelle des Kontaktbereichs 120 bzw. des Dichtungswulstes 116 erzielt.

Diese Topographie des Kontaktbereiches 120 wird durch einen Biege- und/oder Prägevorgang an dem Gehäusedeckel 100 erzeugt, wobei die Materialstärke des Gehäusedeckels 100 längs des Kontaktbereiches 120 im wesentlichen konstant bleibt.

Der Kontaktbereich 120 wird so gebogen, dass er in den zwischen jeweils zwei benachbarten Befestigungsmitteldurchtrittsöffnungen 108 liegenden Kontaktbereichsabschnitten 122, von der Innenseite des Gehäusedeckels 100 aus gesehen, konvex gewölbt ist.

Zur Herstellung des vorstehend beschriebenen Gehäusedeckels 100 wird wie folgt vorgegangen:

In einem Folgeverbundwerkzeug wird aus einem Blech eines metallischen Materials, insbesondere aus einem Aluminiumblech, der Gehäusedeckel 100 mit der gewünschten Außenkontur und den Befestigungsmitteldurchtrittsöffnungen 108 ausgestanzt.

Ferner wird der Gehäusedeckel 100 in dem Folgeverbundwerkzeug durch geeignete Umformwerkzeuge mit der eingeprägten Nut 112, mit der Abkröpfung 106 und mit der vorstehend beschriebenen Topographie des Kontaktbereichs 120 versehen.

Anschließend wird durch ein Siebdruckverfahren der Dichtungswulst 116 aus dem Elastomermaterial am Nutgrund 118 der Nut 112 erzeugt.

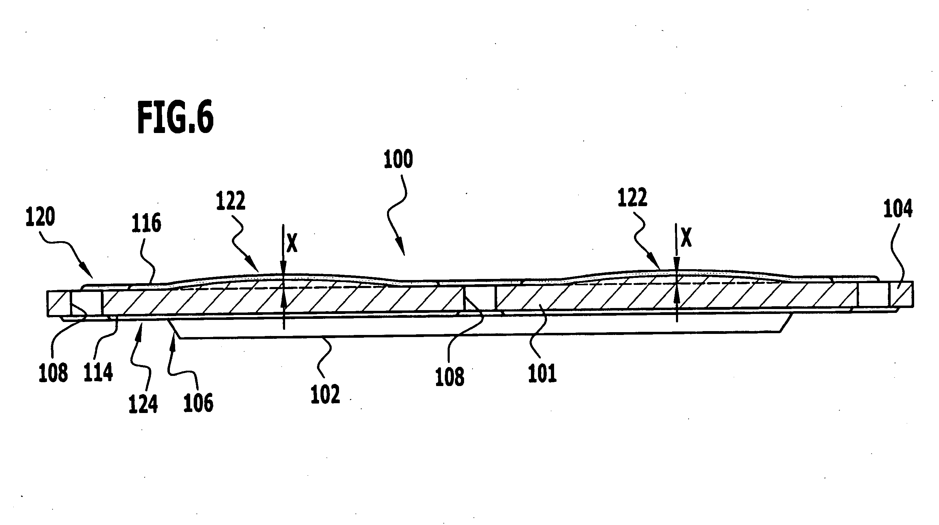

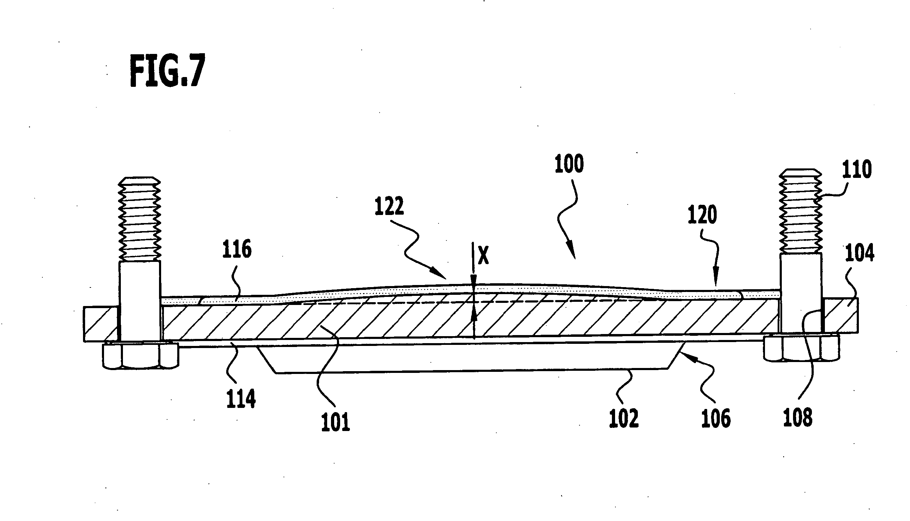

Eine in den Fig. 6 und 7 dargestellte zweite Ausführungsform eines Gehäusedeckels 100 unterscheidet sich von der vorstehend beschriebenen ersten Ausführungsform lediglich dadurch, dass die Materialstärke des Gehäusedeckels 100 längs der Kontaktbereichsabschnitte 122 nicht im wesentlichen konstant ist, sondern in der Längsrichtung der Kontaktbereichsabschnitte 122 in Abhängigkeit vom Abstand zu der jeweils nächstliegenden Befestigungsmitteldurchtrittsöffnung 108 variiert.

Insbesondere ist der Gehäusedeckel 100 bei dieser Ausführungsform so ausgebildet, dass die Materialstärke des Gehäusedeckels 100 ungefähr in der Mitte zwischen zwei in der Umfangsrichtung des Gehäusedeckels 100 aufeinanderfolgenden Befestigungsmitteldurchtrittsöffnungen 108 am größten ist und von dort zu den Befestigungsmitteldurchtrittsöffnungen 108 hin abnimmt.

Dieser Verlauf der Materialstärke des Gehäusedeckels 100 im Kontaktbereich 120 kann beispielsweise durch einen Prägevorgang an einem ursprünglich konstante Materialstärke aufweisenden Gehäusedeckel 100 erzeugt werden.

Der dem Kontaktbereich 120 gegenüberliegende Bereich 124 der Außenseite des Gehäusedeckels 100 kann im wesentlichen eben ausgebildet sein.

Im übrigen stimmt die in den Fig. 6 und 7 dargestellte zweite Ausführungsform eines Gehäusedeckels 100 hinsichtlich Aufbau, Funktion und Herstellungsweise mit der ersten Ausführungsform überein, auf deren vorstehende Beschreibung insoweit Bezug genommen wird.

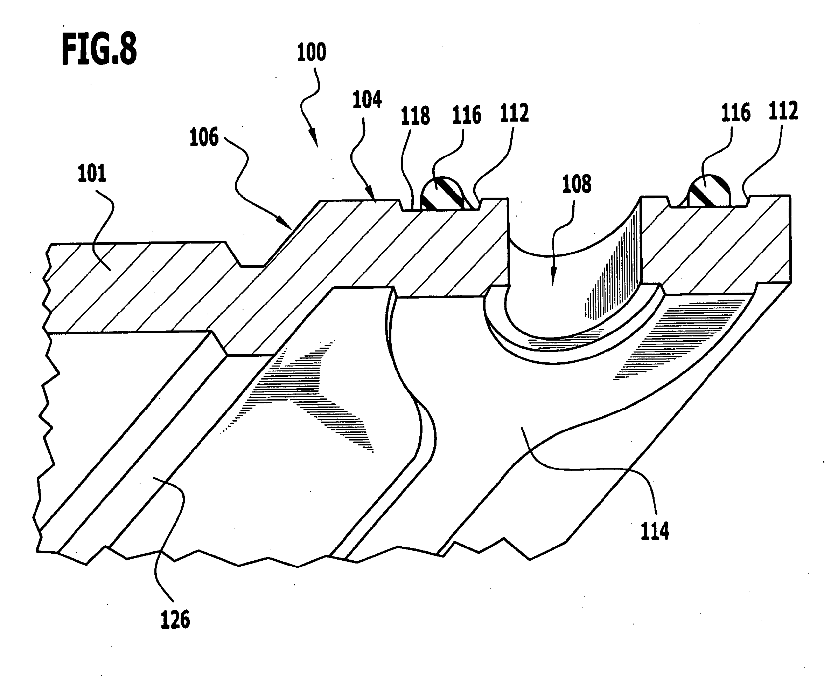

Eine in Fig. 8 ausschnittsweise dargestellte dritte Ausführungsform eines Gehäusedeckels 100 unterscheidet sich von den beiden vorstehend beschriebenen Ausführungsformen dadurch, dass die Nut 112 und der Dichtungswulst 116 nicht überall zwischen den Befestigungsmitteldurchtrittsöffnungen 108 einerseits und der Abkröpfung 106 andererseits verlaufen, sondern sich (in der Umfangsrichtung des Gehäusedeckels 100 gesehen) jeweils vor einer Befestigungsmitteldurchtrittsöffnung 108 verzweigen und nach Passieren der Befestigungsmitteldurchtrittsöffnung 108 (sowohl links als auch rechts von der Befestigungsmitteldurchtrittsöffnung 108) wieder zusammenlaufen, so dass jede Befestigungsmitteldurchtrittsöffnung 108 sowohl von der Nut 112 als auch von dem Dichtungswulst 116 ringförmig eingeschlossen ist.

Auf diese Weise wird erreicht, dass der Bereich jeder Befestigungsmitteldurchtrittsöffnung 108 sowohl zum Mittelbereich 102 des Gehäusedeckels 100 hin als auch zum äußeren Rand des Gehäusedeckels 100 hin durch den Dichtungswulst 116 fluiddicht abgedichtet ist.

Ferner ist die dritte Ausführungsform eines Gehäusedeckels 100 mit einer den Gehäusedeckel 100 versteifenden Versteifungssicke 126 versehen, welche am dem Mittelbereich 102 zugewandten inneren Rand der Abkröpfung 106 parallel zu derselben ausgebildet ist.

Im übrigen stimmt die in Fig. 8 dargestellte dritte Ausführungsform eines Gehäusedeckels 100 hinsichtlich Aufbau, Funktion und Herstellungsweise mit den beiden ersten Ausführungsformen überein, auf deren vorstehende Beschreibung insoweit Bezug genommen wird.

## Patentansprüche

1. Gehäusedeckel zum Festlegen an einem Gehäuse, insbesondere an einem Getriebegehäuse oder an einem Lenkgetriebegehäuse,
**dadurch gekennzeichnet,**
**dass** der Gehäusedeckel (100) als ein Blechformteil ausgebildet ist,
**dass** der Gehäusedeckel (100) mit mehreren Befestigungsmitteldurchtrittsöffnungen (108) und mit einem Dichtungswulst (116), der ein elastomeres Material umfasst, versehen ist,
**dass** der Gehäusedeckel (100) mit einer eingeprägten Nut (112) versehen ist, in welcher der Dichtungswulst (116) angeordnet ist, und
**dass**, in einem Ruhezustand des Gehäusedeckels (100) vor dem Anziehen des Gehäusedeckels (100) gegen das Gehäuse mittels der Befestigungsmittel (110), mindestens ein zwischen zwei Befestigungsmitteldurchtrittsöffnungen (108) liegender Kontaktbereichsabschnitt (122) der im montierten Zustand des Gehäusedeckels (100) dem Gehäuse zugewandten Innenseite des Gehäusedeckels (100), welcher einen Abschnitt des Dichtungswulstes (116) trägt, zumindest abschnittsweise über die innenseitigen Ränder der beiden angrenzenden Befestigungsmitteldurchtrittsöffnungen (108) übersteht.

2. Gehäusedeckel nach Anspruch 1, **dadurch gekennzeichnet, dass** der Kontaktbereichsabschnitt (122), von der Innenseite des Gehäusedeckels (100) aus gesehen, im wesentlichen konvex ausgebildet ist.

3. Gehäusedeckel nach einem der Ansprüche 1 oder 2, **dadurch gekennzeichnet, dass** der Gehäusedeckel (10b) längs des Kontaktbereichsabschnitts (122) eine im wesentlichen konstante Materialstärke aufweist.

4. Gehäusedeckel nach einem der Ansprüche 1 oder 2, **dadurch gekennzeichnet, dass** der Gehäusedeckel (100) längs des Kontaktbereichsabschnitts (122) eine in der Längsrichtung des Kontaktbereichsabschnitts (122) variierende Materialstärke aufweist.

5. Gehäusedeckel nach einem der Ansprüche 1 bis 2 oder 4, **dadurch gekennzeichnet, dass** der dem Kontaktbereichsabschnitt (122) gegenüberliegende Bereich der Außenseite des Gehäusedeckels (100) im wesentlichen eben ausgebildet ist.

6. Gehäusedeckel nach einem der Ansprüche 1 bis 5, **dadurch gekennzeichnet, dass** der Überstand (x) des Kontaktbereichsabschnitts (122) über die innenseitigen Ränder der beiden angrenzenden Befestigungsmitteldurchtrittsöffnungen (108) in der Längsrichtung des Kontaktbereichsabschnitts (122) variiert.

7. Gehäusedeckel nach Anspruch 6, **dadurch gekennzeichnet, dass** der Überstand (x) des Kontaktbereichsabschnitts (122) über die innenseitigen Ränder der beiden angrenzenden Befestigungsmitteldurchtrittsöffnungen (108) ungefähr in der Mitte zwischen den beiden angrenzenden Befestigungsmitteldurchtrittsöffnungen (108) am größten ist.

8. Gehäusedeckel nach einem der Ansprüche 1 bis 7, **dadurch gekennzeichnet, dass** der Gehäusedeckel (100) mit einem in den Gehäusedeckel (100) eingeprägten Versteifungselement versehen ist.

9. Gehäusedeckel nach Anspruch 8, **dadurch gekennzeichnet, dass** das Versteifungselement als eine Versteifungssicke (106) ausgebildet ist.

10. Gehäusedeckel nach einem der Ansprüche 8 oder 9, **dadurch gekennzeichnet, dass** das Versteifungselement zumindest abschnittsweise im wesentlichen parallel zu einer in dem Gehäusedeckel (100) eingeprägten Nut (112) verläuft, in welcher der Dichtungswulst (116) angeordnet ist.

11. Gehäusedeckel nach einem der Ansprüche 1 bis 10, **dadurch gekennzeichnet, dass** der Dichtungswulst (116) stoffschlüssig mit einer Grundplatte (101) des Gehäusedeckels (100) verbunden ist.

12. Gehäusedeckel nach Anspruch 11, **dadurch gekennzeichnet, dass** der Dichtungswulst (116) durch Auftrag mittels eines Dispensers und/oder mittels eines Musterdruckverfahrens, insbesondere mittels eines Siebdruckverfahrens, auf den Gehäusedeckel (100) aufgebracht ist.

13. Gehäusedeckel nach einem der Ansprüche 1 bis 12, **dadurch gekennzeichnet, dass** der Gehäusedeckel (100) als ein Blechformteil aus Aluminium oder aus einer Aluminiumlegierung ausgebildet ist.

## Claims

1. A housing cover for fixing to a housing, in particular to a gear housing or a steering gear housing, **characterised in that** the housing cover (100) is configured as a sheet metal formed part, **in that** the housing cover (100) is provided with a plurality of fastening means through-apertures (108) and with a sealing bead (116), which comprises an elastomeric material, **in that** the housing cover (100) is provided with an impressed groove (112) in which the sealing bead (116) is arranged, and **in that**, when the housing cover (100) is in a rest state prior to tightening the housing cover (100) against the housing by means of the fastening means (110), at least one contact region portion (122), located between two fastening means through-apertures (108), of the inside of the housing cover (100) which faces the housing when the housing cover (100) is in the fitted state and which carries a portion of the sealing bead (116), projects at least in sections over the inside edges of the two adjacent fastening means through-apertures (108).

2. A housing cover according to claim 1, **characterised in that** the contact region portion (122), viewed from the inside of the housing cover (100), is formed substantially convex.

3. A housing cover according to claim 1 or 2, **characterised in that** along the contact region portion (122) the housing cover (100) has a substantially constant material thickness.

4. A housing cover according to claim 1 or 2, **characterised in that** along the contact region portion (122) the housing cover (100) has a material thickness which varies in the longitudinal direction of the contact region portion (122).

5. A housing cover according to any one of claims 1 to 2 or 4, **characterised in that** the region of the outside of the housing cover (100) opposing the contact region portion (122) is substantially flat.

6. A housing cover according to any one of claims 1 to 5, **characterised in that** the projection (x) of the contact region portion (122) over the inside edges of the two adjacent fastening means through-apertures (108) varies in the longitudinal direction of the contact region portion (122).

7. A housing cover according to claim 6, **characterised in that** the projection (x) of the contact region portion (122) over the inside edges of the two adjacent fastening means through-apertures (108) is greatest approximately in the centre between the two adjacent fastening means through-apertures (108).

8. A housing cover according to any one of claims 1 to 7, **characterised in that** the housing cover (100) is provided with a reinforcement element impressed in the housing cover (100).

9. A housing cover according to claim 8, **characterised in that** the reinforcement element is configured as a stiffening corrugation (106).

10. A housing cover according to either of claims 8 or 9, **characterised in that** the reinforcement element extends, at least in sections, substantially parallel to a groove (112) impressed in the housing cover (100), in which groove the sealing bead (116) is arranged.

11. A housing cover according to any one of claims 1 to 10, **characterised in that** the sealing bead (116) is integrally connected to a base plate (101) of the housing cover (100).

12. A housing cover according to claim 11, **characterised in that** the sealing bead (116) is provided by application by means of a dispenser and/or by means of a pattern printing method, in particular by means of a screen printing method, onto the housing cover (100).

13. A housing cover according to any one of claims 1 to 12, **characterised in that** the housing cover (100) is configured as a sheet metal formed part made of aluminium or of an aluminium alloy.

## Revendications

1. Couvercle de boîtier destiné à être fixé au niveau d'un boîtier, notamment au niveau d'un boîtier de boîte de vitesses ou d'un boîtier de direction,
**caractérisé**
◆ **en ce que** le couvercle de boîtier (100) est réalisé sous forme d'une pièce usinée en tôle,
◆ en ce que le couvercle de boîtier (100) est pourvu de plusieurs ouvertures de passage de moyen de fixation (108) et d'un bourrelet d'étanchéité (116) contenant un matériau élastomère,
◆ en ce que le couvercle de boîtier (100) est pourvu d'une rainure gaufrée (112) dans laquelle le bourrelet d'étanchéité (116) est disposé et que, dans une position de repos du couvercle de boîtier (100), avant le serrage du couvercle de boîtier (100) contre le boîtier au moyen du moyen de fixation (110), au moins une section de zone de contact (122) située entre deux ouvertures de passage de moyen de fixation (108) de la face interne tournée, à l'état monté du couvercle de boîtier (100), vers le boîtier du couvercle de boîtier (100) qui supporte une section du bourrelet d'étanchéité (116) dépasse au moins par sections par rapport aux bords situés du côté interne des deux ouvertures de passage de moyen de fixation adjacentes (108).

2. Couvercle de boîtier selon la revendication 1, **caractérisé en ce que** la section de zone de contact (122), vue depuis la face interne du couvercle de boîtier (100), est réalisée essentiellement de manière convexe.

3. Couvercle de boîtier selon l'une quelconque des revendications 1 ou 2, **caractérisé en ce que** le couvercle de boîtier (100), le long de la section de zone de contact (122), présente une épaisseur de matériau essentiellement constante.

4. Couvercle de boîtier selon l'une quelconque des revendications 1 ou 2, **caractérisé en ce que** le couvercle de boîtier (100), le long de la section de zone de contact (122), présente une épaisseur de matériau variable dans le sens longitudinal de la section de zone de contact (122).

5. Couvercle de boîtier selon l'une quelconque des revendications 1 à 2 ou 4, **caractérisé en ce que** la zone opposée à la section de zone de contact (122) de la face extérieure du couvercle de boîtier (100) est réalisée de manière essentiellement plane.

6. Couvercle de boîtier selon l'une quelconque des revendications 1 à 5, **caractérisé en ce que** la saillie (x) de la section de zone de contact (122) par rapport aux bords situés du côté interne des deux ouvertures de passage de moyen de fixation adjacentes (108) varice dans le sens longitudinal de la section de zone de contact (122).

7. Couvercle de boîtier selon la revendication 6, **caractérisé en ce que** la saillie (x) de la section de zone de contact (122) par rapport aux bords situés du côté interne des deux ouvertures de passage de moyen de fixation adjacentes (108) est maximale approximativement au centre entre les deux ouvertures de passage de moyen de fixation adjacentes (108).

8. Couvercle de boîtier selon l'une quelconque des revendications 1 à 7, **caractérisé en ce que** le couvercle de boîtier (100) est pourvu d'un élément de raidissement gaufré dans le couvercle de boîtier (100).

9. Couvercle de boîtier selon la revendication 8, **caractérisé en ce que** l'élément de raidissement est réalisé sous forme d'une moulue de raidissement (106).

10. Couvercle de boîtier selon l'une quelconque des revendications 8 ou 9, **caractérisé en ce que** l'élément de raidissement s'étend, au moins par sections, essentiellement de manière parallèle à une rainure (112) gaufrée dans le couvercle de boîtier (100), dans laquelle le bourrelet d'étanchéité (116) est disposé.

11. Couvercle de boîtier selon l'une quelconque des revendications 1 à 10, **caractérisé en ce que** le bourrelet d'étanchéité (116) est raccordé en liaison de matière à une plaque de base (101) du couvercle de boîtier (100).

12. Couvercle de boîtier selon la revendication 11, **caractérisé en ce que** le bourrelet d'étanchéité (116) est appliqué par application au moyen d'un dispensateur et/ou au moyen d'un procédé d'impression de motif, notamment au moyen d'un procédé d'impression sérigraphique, sur le couvercle de boîtier (100).

13. Couvercle de boîtier selon l'une quelconque des revendications 1 à 12, **caractérisé en ce que** le couvercle de boîtier (100) est réalisé sous la forme d'une pièce usinée en tôle en aluminium ou en alliage d'aluminium.
